# NEUE EUROPÄISCHE PATENTSCHRIFT

(11) **EP 2 535 550 B2**
(45) Veröffentlichungstag und Bekanntmachung des Hinweises auf die Entscheidung über den Einspruch: **04.03.2020**
(45) Hinweis auf die Patenterteilung: 08.06.2016
(21) Anmeldenummer: 12171895.1
(22) Anmeldetag: 14.06.2012
(51) Int. Cl.: F02M 35/024

(54) **Ringfilterelement**
Ring filter element
Elément de filtre annulaire

(30) Priorität: 17.06.2011 DE 102011077710
(43) Veröffentlichungstag der Anmeldung: 19.12.2012
(73) Patentinhaber: MAHLE International GmbH, 70376 Stuttgart (DE)
(72) Erfinder: Kaiser, Sven Alexander, 71364 Winnenden (DE); Schieszl, Andreas, 73479 Ellwangen (DE); Schwörer, Falko, 70569 Stuttgart (DE)
(74) Vertreter: BRP Renaud & Partner mbB Rechtsanwälte Patentanwälte Steuerberater

(56) Entgegenhaltungen:
- EP-A1- 1 163 844
- EP-A1- 1 754 525
- WO-A1-2010/075564
- WO-A1-2010/111008
- WO-A1-2012/172017
- WO-A2-2012/172020
- DE-A1- 10 235 275
- DE-A1-102011 077 710
- DE-U1-202008 010 504
- DE-U1-202009 000 969
- DE-U1-202009 016 500
- DE-U1-202010 005 861
- GB-A- 2 448 974
- US-A- 3 288 299
- US-A- 3 317 046
- US-A- 5 622 624
- US-A1- 2005 211 094
- US-A1- 2011 132 816

## Beschreibung

Die vorliegende Erfindung betrifft ein Ringfilterelement, insbesondere für eine Luftfiltereinrichtung einer Frischluftanlage einer Brennkraftmaschine, mit den Merkmalen des Oberbegriffs des Anspruchs 1. Die Erfindung betrifft außerdem eine Filtereinrichtung, insbesondere eine Luftfiltereinrichtung einer Frischluftanlage einer Brennkraftmaschine, die mit einem derartigen Ringfilterelement ausgestattet ist.

Üblicherweise umfasst ein Ringfilterelement, das bei Luftfiltereinrichtungen in Frischluftanlagen von Brennkraftmaschinen zur Anwendung kommt, einen ringförmigen Filterkörper aus einem gefalteten Bahnenmaterial. Fertigungstechnisch sind bei einem derartigen Ringfilterelement zwangsläufig in der Umfangsrichtung zwei Endfalten des Bahnenmaterials vorhanden, die auf geeignete Weise luftdicht miteinander verbunden werden müssen. Dieser Verbindungsbereich wird bei herkömmlichem Ringfilterelementen gezielt so ausgestaltet, dass er sich möglichst wenig von allen übrigen Faltenbereichen unterscheidet, in denen benachbarte Falten übergangslos ineinander übergehen. Insbesondere soll dadurch die radiale Anströmung des Ringfilterelements möglichst homogen erfolgen. Ein Beispiel einer solchen Ringfilterelement ist in DE-202008010504 U1 gezeigt.

Es hat sich jedoch gezeigt, dass bei modernen Brennkraftmaschinen, bei denen in der Frischluftanlage stromab des Ringfilterelements eine Luftmassenmessung mit Hilfe einer geeigneten Sensorik durchgeführt wird, die Messwerte davon abhängen, wie das Ringfilterelement hinsichtlich seiner Drehlage in der jeweiligen Filtereinrichtung positioniert ist. Von der Drehlage des Ringfilterelements hängt die Relativlage zwischen dem vorstehend genannten Verbindungsbereich der Endfalten und der vorstehend genannten Sensorik ab. Um diese Abhängigkeit auszugleichen, wird bei der Erstmontage der Frischluftanlage eine Kalibrierung der Sensorik durchgeführt. Im Falle eines Wechsels des Ringfilterelements kann sich jedoch die relative Lage zwischen dem Verbindungsbereich und der Sensorik ändern, so dass eine neue Kalibrierung durchgeführt werden muss, falls fehlerhafte Messwerte und in Verbindung damit eine fehlerhafte Ansteuerung der Brennkraftmaschine vermieden werden soll. Die Kosten für die Kalibrierung der Sensorik übersteigen dabei die Kosten für das Ringfilterelement, so dass hier ein Verbesserungsbedarf besteht.

Aus der DE 20 2008 010 504 U1 ist eine Filtereinrichtung mit einem Ringfilterelement bekannt, das einen ringförmigen Filterkörper aus einem gefalteten Bahnenmaterial und zwei den Filterkörper axial begrenzende Endscheiben aufweist. In der Umfangsrichtung aneinander grenzende Endfalten des Bahnenmaterials sind zur Ausbildung eines sich zur Drehlagenausrichtung des Filterelements geeigneten Verbindungsbereichs miteinander verbunden. Beim bekannten Ringfilterelement sind die Endfalten in axialen Endbereichen in Klammern eingesteckt und darin gehalten, die an scheibenförmigen Tragstrukturen ausgeformt sind. An diese Tragstrukturen, die an einer Innenzarge des Ringfilterelements stirnseitig angeordnet sind, sind die Endscheiben angespritzt. Die eigentliche Drehlagenausrichtung erfolgt beim bekannten Ringfilterelement durch eine an einer der Tragstrukturen ausgeformte Ausrichtkontur, die mit einer dazu komplementären Gegenausrichtkontur zusammenwirkt, die in einem Gehäuse der Filtereinrichtung ausgebildet ist.

Die vorliegende Erfindung beschäftigt sich mit dem Problem, für ein Ringfilterelement bzw. für eine damit ausgestattete Filtereinrichtung eine verbesserte oder zumindest eine andere Ausführungsform anzugeben, welche die Kosten eines Filterelementwechsels reduziert.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Verbindungsbereich, in dem die aneinander grenzenden Faltenenden des Bahnenmaterials direkt miteinander verbunden sind, so auszugestalten, dass sich der Verbindungsbereich für eine Drehlagenausrichtung des Filterelements eignet. Im direkten Gegensatz zur herkömmlichen Ausgestaltung eines derartigen Verbindungsbereichs soll sich der Erfindungsbereich beim erfindungsgemäßen Ringfilterelement signifikant von den daran angrenzenden Faltenbereichen unterscheiden, so dass besonders einfach eine Drehlagenausrichtung des Ringfilterelements und somit eine Montage in einer vorbestimmten Drehlage möglich ist. Erfolgt nämlich die Kalibrierung der Sensorik für die vorbestimmte Drehlage des Ringfilterelements, braucht bei einem Elementwechsel keine neue Kalibrierung durchgeführt werden, wenn auch das neue Ringfilterelement in der vorbestimmten Relativlage ordnungsgemäß montiert wird. Um diese vorbestimmte Relativlage zuverlässig und insbesondere automatisch und zwangsläufig einstellen zu können, ist der Verbindungsbereich zur Drehlagenausrichtung gestaltet. Da im Rahmen eines Filterelementwechsels somit keine Kalibrierung der Sensorik mehr erforderlich ist, lassen sich die Kosten des Filterelementwechsels deutlich reduzieren. Insbesondere ist nur noch bei der Erstmontage des Ringfilterelements eine Kalibrierung der Sensorik durchzuführen. Grundsätzlich ist jedoch auch eine derartige Kalibrierung der Sensorik in der jeweiligen Frischluftanlage im Rahmen der Erstmontage entbehrlich, wenn die jeweilige Sensorik vor dem Einbau in die Frischluftanlage in einer Referenz-Frischluftanlage kalibriert wird, die ein neues Ringfilterelement in der vorbestimmten Montagestellung enthält.

Insbesondere kann im Verbindungsbereich eine radial nach außen offene Längsnut ausgebildet sein, die insbesondere von außen einfach abgetastet werden kann und bspw. eine Zwangsausrichtung ermöglicht. Alternativ kann im Verbindungsbereich ebenso eine radial nach innen offene Längsnut ausgebildet sein. Der jeweilige Nutgrund der Längsnut kann bspw. durch die aneinander anliegenden Endfalten gebildet sein.

Erfindungsgemäß weist zumindest eine Endscheibe des Filterelements, die den Filterkörper axial begrenzt, eine zur Längsnut komplementäre Aussparung auf. Auf diese Weise ist es möglich, die Drehlagenausrichtung des Filterelements im Bereich der mit der Aussparung ausgestatteten Endscheibe zu realisieren.

Entsprechend einer vorteilhaften Ausführungsform kann der Verbindungsbereich so konzipiert sein, dass er sich in der Axialrichtung über den ganzen Filterkörper und in der Umfangsrichtung nur über einen Teil des Filterkörpers erstreckt. Auf diese Weise ist die Drehlagenerkennung über die gesamte axiale Höhe des Ringfilterelements realisierbar.

Der Verbindungsbereich ist zweckmäßig so ausgestaltet, dass er sich hinsichtlich der Geometrie von in der Umfangsrichtung daran angrenzenden Faltenbereichen des Filterkörpers unterscheidet. In derartigen Faltenbereichen grenzen die Falten innerhalb des Bahnenmaterials unterbrechungsfrei aneinander an, wodurch insbesondere eine eng und gleichmäßige Faltung realisierbar ist. Von dieser Faltung unterscheidet sich der Verbindungsbereich signifikant, was die gewünschte Drehlagenausrichtung vereinfacht.

Erfindungsgemäß liegen die beiden Endfalten im Verbindungsbereich flächig aneinander an und erstrecken sich dabei tangential zu einem Kreis um die Längsmittelachse des Filterkörpers. Der Verbindungsbereich ist dadurch haptisch und optisch einfach erkennbar.

Bei einer anderen vorteilhaften Ausführungsform kann im Verbindungsbereich ein Profilkörper angeordnet sein, der sich parallel zur Längsmittelachse des Filterkörpers erstreckt und eine radial nach innen oder nach außen offene Längsnut ausbildet. Hierdurch wird der Verbindungsbereich signifikant stabilisiert, was eine automatisierte Drehlagenausrichtung des Ringfilterelements vereinfacht. Insbesondere kann besagter Profilkörper in die zuvor genannte, durch den Verbindungsbereich ausgebildete Längsnut eingesetzt sein, um so den Verbindungsbereich auszusteifen. Hierbei kann der Profilkörper derart ausgeführt sein, dass er radial über den durch die Faltenrücken gebildeten Umfang hinausragt. Dieser Überstand kann zur Ausrichtung des Filterelementes im Gehäuse genutzt werden.

Bei einer anderen Ausführungsform kann der Profilkörper integral an einer Innenzarge des Filterelements ausgeformt sein, an der sich der Filterkörper radial innen abstützt. Sofern das Filterelement ohnehin mit einer Innenzarge ausgestattet ist, lässt sich der Profilkörper nahezu ohne Mehraufwand herstellen.

Zusätzlich oder alternativ kann der Profilkörper integral an einer Endscheibe des Filterelements ausgeformt sein, die den Filterkörper axial begrenzt. Auch diese Integralbauweise vereinfacht die Herstellung des Filterelements mit Profilkörper.

Zusätzlich oder alternativ kann der Profilkörper in wenigstens eine Endscheibe des Filterelements eingebettet sein, die den Filterkörper axial begrenzt. Hierdurch wird der Profilkörper an der jeweiligen Endscheibe fixiert. Dies kann besonders einfach im Rahmen der Montage der Endscheibe erfolgen. Beispielsweise kann der Profilkörper zusammen mit dem Filterkörper in die jeweilige Endscheibe einplastifiziert werden.

Entsprechend einer anderen vorteilhaften Ausführungsform kann der Filterkörper zumindest zwei in der Umfangsrichtung voneinander beabstandete derartige Verbindungsbereiche aufweisen, die vorzugsweise gleich ausgestaltet sein können oder alternativ auch unterschiedlich ausgestaltet sein können.

Eine erfindungsgemäße Filtereinrichtung, die mit einem Ringfilterelement der vorstehend beschriebenen Art ausgestattet ist, weist ein Gehäuse zur Aufnahme des Ringfilterelements auf, wobei das Gehäuse eine Ausrichtkontur besitzt, die beim Einsetzen des Ringfilterelements mit dem Verbindungsbereich zum Ausrichten der Drehlage des Ringfilterelements zusammenwirkt. Um das Ringfilterelement ordnungsgemäß montieren zu können, muss es also zwangsläufig in die richtige Drehlage ausgerichtet werden. Auf diese Weise wird erreicht, dass das Ringfilterelement bei seiner Montage, insbesondere im Rahmen eines Austausches des Ringfilterelements, stets die richtige Relativlage besitzt, so dass eine neue Kalibrierung der Sensorik zur Bestimmung der Luftmasse nicht erforderlich ist.

Gemäß einer vorteilhaften Ausführungsform kann die Ausrichtkontur des Gehäuses ein bezüglich der Längsmittelachse des Filterkörpers radial nach innen vorstehender Vorsprung sein, der bei einem Filterelement, das eine radial nach außen offene Längsnut aufweist, in diese Längsnut eingreift und/oder bei einem Filterelement, bei dem zumindest eine Endscheibe eine Aussparung aufweist, in diese Aussparung eingreift. Alternativ kann das Gehäuse über einen nach außen ragenden Vorsprung verfügen, in welchen eine radial über den Außenumfang nach außen abstehende Geometrie des Filterelements eingreift. Durch die Verwendung eines derartigen Vorsprungs als Ausrichtkontur kann bspw. erreicht werden, dass sich das Gehäuse nicht verschließen lässt, wenn das Ringfilterelement mit der falschen Drehlage im Gehäuse angeordnet ist. Die Gefahr einer fehlerhaften Montage kann dadurch nochmals reduziert werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: jeweils eine isometrische Ansicht eines Ringfilterelements bei verschiedenen Ausführungsformen,
- Fig. 3 bis 5: jeweils einen Querschnitt durch ein Ringfilterelement bei verschiedenen Ausführungsformen,
- Fig. 6 bis 9: jeweils einen Querschnitt des Ringfilterelements in einem Verbindungsbereich, bei verschiedenen Ausführungsformen,
- Fig. 10 und 11: jeweils einen Querschnitt einer Filtereinrichtung bei verschiedenen Ausführungsformen.

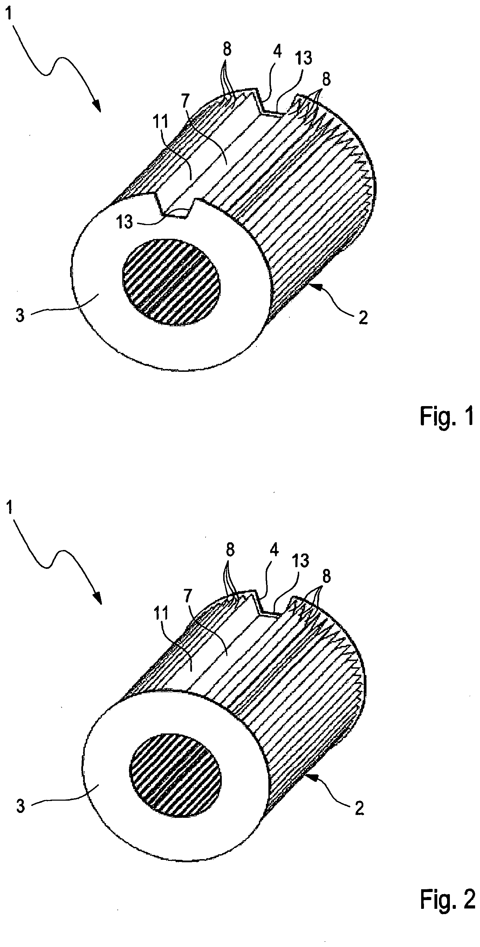

Entsprechend den Fig. 1 und 2 umfasst ein Ringfilterelement 1 einen ringförmigen Filterkörper 2, der aus einem gefalteten Bahnenmaterial hergestellt ist. Das Ringfilterelement 1 weist außerdem zwei Endscheiben 3, 4 auf, die den Filterkörper 2 an entgegengesetzten Enden axial begrenzen.

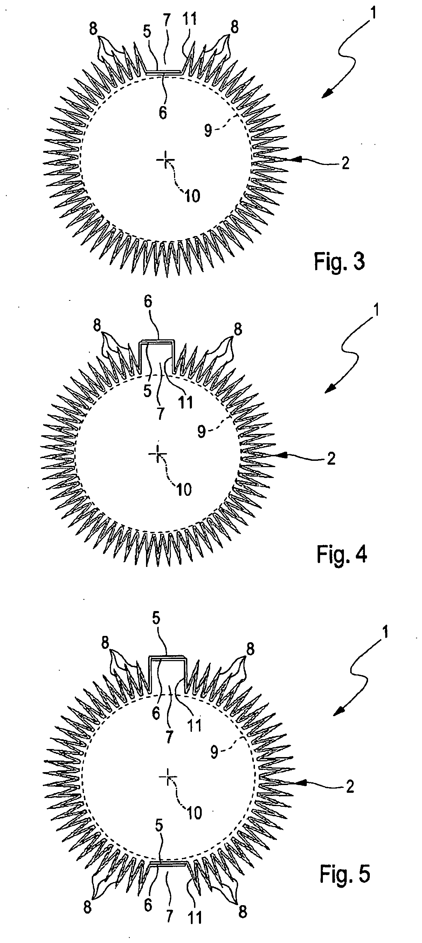

Das Bahnenmaterial zur Herstellung des Filterkörpers 2 wird als endlos gefaltetes Bahnenmaterial bereitgestellt und entsprechend der Größe des herzustellenden Filterkörpers 2 abgelängt. Hierdurch besitzt das Bahnenmaterial zwangsläufig zwei in den Fig. 3 bis 9 und 10 erkennbare Faltenenden 5, 6 oder Endfalten 5, 6, die zum Schließen des ringförmigen Filterkörpers 2 miteinander verbunden werden müssen, wodurch ein Verbindungsbereich 7 gebildet wird. Somit besitzt das jeweilige Ringfilterelement 1 in seinem Filterkörper 2 zwangsläufig zumindest einen Verbindungsbereich 7. Der jeweilige Verbindungsbereich 7 ist bei den hier vorgestellten Ringfilterelementen 1 so ausgestaltet, dass er sich für eine Drehlagenausrichtung des Filterelements 1 eignet.

Hierzu ist der Verbindungsbereich 7 hinsichtlich seiner Geometrie von Faltenbereichen 8, die in der Umfangsrichtung an den Verbindungsbereich 7 angrenzen, unterschiedlich ausgestaltet.

Bei den hier gezeigten Ausführungsformen erstreckt sich der Verbindungsbereich 7 innerhalb des Filterkörpers 2 in der Axialrichtung über den gesamten Filterkörper 2 und in der Umfangsrichtung nur über einen Teil des Filterkörpers 2.

Entsprechend den Ausführungsformen der Fig. 1 bis 6 und 10 liegen die beiden Endfalten 5, 6 im Verbindungsbereich 7 flächig aneinander an und erstrecken sich dabei tangential zu einem in den Fig. 3 bis 5 mit unterbrochener Linie angedeuteten Kreis 9, der seinen Mittelpunkt auf einer Längsmittelachse 10 des Filterkörpers 2 besitzt.

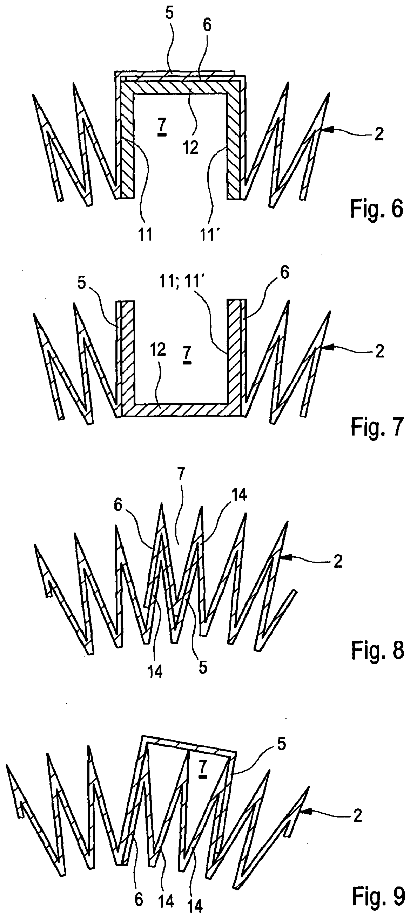

Zweckmäßig kann der Verbindungsbereich 7 eine Längsnut 11 ausbilden, die bei den Ausführungsformen der Fig. 1 bis 3, 7, 10 und 11 radial nach außen offen ist und bei den Ausführungsformen der Fig. 4 und 6 radial nach innen offen ist. Fig. 5 zeigt eine Ausführungsform mit zwei Verbindungsbereichen 7, die jeweils eine Längsnut 11 bilden, von denen die eine nach innen offen ist, während die andere nach außen offen ist. Die beiden Verbindungsbereiche 7 sind dabei in der Umfangsrichtung voneinander beabstandet angeordnet.

Entsprechend den Fig. 6 und 7 kann im Verbindungsbereich 7 ein Profilkörper 12 angeordnet sein, der sich parallel zur Längsmittelachse 10 des Filterkörpers 2 erstreckt. In den gezeigten Beispielen bildet der Profilkörper 12 ebenfalls eine Längsnut 11', die gemäß Fig. 6 radial nach innen offen sein kann oder gemäß Fig. 7 radial nach außen offen sein kann, wobei Fig. 7 eine nicht zur Erfindung gehörende Variante zeigt. Bei der in Fig. 6 gezeigten Ausführungsform ist der Profilkörper 12 in die durch die Endfalten 5, 6 ausgebildete Nut 11 eingesetzt, um diese zu verstärken. Bei der in Fig. 7 gezeigten Ausführungsform bildet die Nut 11' des Profilkörpers 12 die Nut 11 des Verbindungsbereichs 7. Während bei der in Fig. 6 gezeigten Ausführungsform die Faltenenden 5, 6 unmittelbar aneinander befestigt sind, sind bei der in Fig. 7 gezeigten Ausführungsform die beiden Faltenenden 5, 6 voneinander beabstandet am Profilkörper 12 angeordnet und am Profilkörper 12 separat befestigt. Bei der in Fig. 6 gezeigten Ausführungsform kann das Bahnenmaterial im Verbindungsbereich 7 am Profilkörper 12 befestigt sein.

Bei den gemäß der Figuren 4, 5 und 6 dargestellten Elementen schließen die Verbindungsbereiche mit dem durch die Faltenrücken gebildeten Umfang ab. Bei alternativen Ausgestaltungen kann es zur verbesserten Positionierung des Filterelementes 1 im Gehäuse vorteilhaft sein, wenn der Verbindungsbereich radial über den Umfang der Faltenrücken übersteht. Dieser Überstand kann durch die Falten selbst bzw. durch das Filtermedium oder durch den eingesetzten Profilkörper 12 gebildet sein.

Der Profilkörper 12 kann an einer hier nicht gezeigten Innenzarge des Filterelements 1 integral ausgeformt sein. An einer derartigen Innenzarge kann sich der Filterkörper 2 radial innen abstützen.

Ebenso ist es möglich, dass der Profilkörper 12 integral an einer der Endscheiben 3, 4 ausgeformt ist. Ferner kann der Profilkörper 12 zumindest in eine der Endscheiben 3, 4 eingebettet sein. Außerdem ist es möglich, dass der Profilkörper 12 an einer der Endscheiben 3, 4 integral ausgeformt ist und in die andere Endscheibe eingebettet ist. Alternativ kann der Profilkörper 12 in beide Endscheiben 3, 4 eingebettet sein.

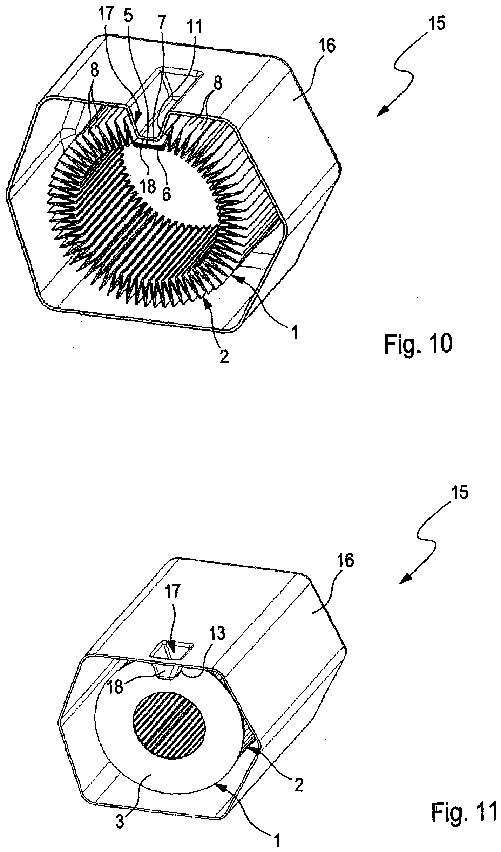

Gemäß den Fig. 1, 2 und 11 kann zumindest eine der Endscheiben 3, 4 eine zur Längsnut 11 komplementäre Aussparung 13 aufweisen. Bei der in Fig. 1 gezeigten Ausführungsform besitzen beide Endscheiben 3, 4 eine derartige Aussparung 13. Bei der in Fig. 2 gezeigten Ausführungsform ist nur die vom Betrachter abgewandte Endscheibe 4 mit einer derartigen Aussparung ausgestattet. Bei der in Fig. 11 gezeigten Ausführungsform ist zumindest die dem Betrachter zugewandte Endscheibe 3 mit einer derartigen Aussparung 13 ausgestattet.

Die Fig. 8 und 9 zeigen alternative Ausführungsformen zur Realisierung des Verbindungsbereichs 7, die nicht zur Erfindung gehören. Bei der in Fig. 8 gezeigten Ausführungsform wird der Verbindungsbereich 7 dadurch realisiert, dass mehrere Falten ineinander greifen. Insbesondere greifen somit die Endfalten 5, 6 und jeweils wenigstens eine daran angrenzende "normale" Falte 14 ineinander.

Bei der in Fig. 9 gezeigten Ausführungsform ist die eine Endfalte 5 soweit vergrößert, dass sie die andere Endfalte 6 und wenigstens eine daran anschließende "normale" Falte 14 übergreift.

Gemäß Fig. 10 und 11 eignet sich das Ringfilterelement 1 zur Verwendung in einer Filtereinrichtung 15, die ein Gehäuse 16 zur Aufnahme des Ringfilterelements 1 aufweist. Ferner ist am Gehäuse 16 eine Ausrichtkontur 17 ausgeformt, die beim Einsetzen des Ringfilterelements 1 mit dem Verbindungsbereich 7 zusammenwirkt, um so eine vorbestimmte Drehlage des Ringfilterelements 1 innerhalb des Gehäuses 6 ausrichten zu können. Beispielsweise kann auf diese Weise stets eine vorbestimmte Relativlage des Ringfiltereinsatzes 1 bezüglich einer hier nicht gezeigten Sensorik zur Ermittlung einer Luftmenge oder Luftmasse eingestellt werden.

Die Ausrichtkontur 17 ist bei den gezeigten Ausführungsformen durch einen Vorsprung 18 gebildet, der bezüglich der Längsmittelachse 10 des Ringfiltereinsatzes 1 bzw. des Filterkörpers 2 radial nach innen vorsteht. Bei der in Fig. 10 gezeigten Ausführungsform ist der Vorsprung 18 so konfiguriert, dass er in die radial nach außen offene Längsnut 11 oder 11' radial eingreift, um die Drehlage des Ringfilterelements 1 zu definieren. Bei der in Fig. 11 gezeigten Ausführungsform ist der Vorsprung 18 so konfiguriert, dass er zumindest in die Aussparung 13 der Endscheibe 3 eingreift, um das Ringfilterelement 1 im Gehäuse 16 zu positionieren.

## Patentansprüche

1. Ringfilterelement, insbesondere für eine Filtereinrichtung (15) einer Frischluftanlage einer Brennkraftmaschine,
- mit einem ringförmigen Filterkörper (2) aus einem gefalteten Bahnenmaterial,
- mit wenigstens einer den Filterkörper (2) axial begrenzenden Endscheibe (3, 4),
- wobei in der Umfangsrichtung aneinander grenzende Endfalten (5, 6) zur Ausbildung eines sich zur Drehlagenausrichtung des Filterelements (1) geeigneten Verbindungsbereichs (7) direkt miteinander verbunden sind,
**dadurch gekennzeichnet,**
- **dass** im Verbindungsbereich (7) eine radial nach außen oder radial nach innen offene Längsnut (11) ausgebildet ist,
- **dass** zumindest eine solche Endscheibe (3, 4) eine zur Längsnut (11) komplementäre Aussparung (13) aufweist,
- **dass** die beiden Endfalten (5, 6) im Verbindungsbereich (7) flächig aneinander anliegen und sich dabei tangential zu einem Kreis (9) um die Längsmittelachse (10) des Filterkörpers (2) erstrecken.

2. Ringfilterelement nach Anspruch 1,
**dadurch gekennzeichnet,**
- **dass** sich der Verbindungsbereich (7) hinsichtlich seiner Geometrie von in der Umfangsrichtung daran angrenzenden Faltenbereichen (8) des Filterkörpers (2) unterscheidet, und/oder
- **dass** sich der Verbindungsbereich (7) in der Axialrichtung über den ganzen Filterkörper (2) und in der Umfangsrichtung nur über einen Teil des Filterkörpers (2) erstreckt.

3. Ringfilterelement nach Anspruch 1 oder 2,
**dadurch gekennzeichnet,**
**dass** im Verbindungsbereich (7) ein Profilkörper (12) angeordnet ist, der sich parallel zur Längsmittelachse (10) des Filterkörpers (2) erstreckt und eine radial nach innen oder radial nach außen offene Längsnut (11; 11') ausbildet.

4. Ringfilterelement nach Anspruch 3,
**dadurch gekennzeichnet,**
**dass** der Profilkörper (12) integral an einer Innenzarge des Filterelements (1) ausgeformt ist, an der sich der Filterkörper (2) radial abstützt.

5. Ringfilterelement nach Anspruch 3 oder 4,
**dadurch gekennzeichnet,**
**dass** der Profilkörper (12) integral an einer solchen Endscheibe (3, 4) ausgeformt ist.

6. Ringfilterelement nach einem der Ansprüche 3 bis 5,
**dadurch gekennzeichnet,**
**dass** der Profilkörper (12) in wenigstens eine solche Endscheibe (3, 4) eingebettet ist.

7. Ringfilterelement nach einem der Ansprüche 3 bis 6,
**dadurch gekennzeichnet,**
**dass** die beiden Endfalten (5, 6) voneinander beabstandet jeweils am Profilkörper (12) befestigt sind.

8. Ringfilterelement nach einem der Ansprüche 1 bis 7,
**dadurch gekennzeichnet,**
**dass** der Filterkörper (2) zumindest zwei in Umfangsrichtung voneinander beabstandete Verbindungsbereiche (7) aufweist.

9. Filtereinrichtung, insbesondere Luftfiltereinrichtung einer Frischluftanlage einer Brennkraftmaschine,
- mit einem Ringfilterelement (1) nach einem der Ansprüche 1 bis 8,
- mit einem Gehäuse (16) zur Aufnahme des Ringfilterelements (1),
- wobei das Gehäuse (16) eine Ausrichtkontur (17) aufweist, die beim Einsetzen des Ringfilterelements (1) mit dem Verbindungsbereich (7) zum Ausrichten der Drehlage des Ringfilterelements (1) zusammenwirkt.

10. Filtereinrichtung nach Anspruch 9,
**dadurch gekennzeichnet,**
**dass** die Ausrichtkontur (17) ein bezüglich der Längsmittelachse (10) des Filterkörpers (2) radial nach innen vorstehender Vorsprung (18) ist, der beim Ringfilterelement (1) in die Längsnut (11) und/oder in die Aussparung (13) eingreift.

## Claims

1. A circular filter element, in particular for a filter unit (15) of an air supply system of an internal combustion engine,
- comprising a circular filter body (2) made from a pleated web material,
- comprising at least one end plate (3, 4) that axially delimits the filter body (2),
- wherein end pleats (5, 6), which are adjacent to each other in the circumferential direction, are directly connected to each other for forming a connection region (7) suitable for the rotary position orientation of the filter element (1),
**characterised in that**
- in the connection region (7), a longitudinal groove (11) that opens radially outwards or radially inwards is formed,
- at least one such end plate (3, 4) has a recess (13) that is complementary to the longitudinal groove (11),
- the two end pleats (5, 6) rest against each other in a planar manner in the connection region (7) and in so doing extend tangentially to a circle (9) about the longitudinal central axis (10) of the filter body (2).

2. The circular filter element as claimed in claim 1, **characterised in that**
- the connection region (7) differs from the pleated region (8) of the filter body (2), that is adjacent thereto in the circumferential direction, with regard to the geometry thereof, and/or
- the connection region (7) extends in the axial direction over the entire filter body (2) and in the circumferential direction only over part of the filter body (2).

3. The circular filter element as claimed in claims 1 or 2, **characterised in that** a profiled body (12) is provided in the connection region (7), which extends parallel to the longitudinal central axis (10) of the filter body (2) and forms a longitudinal groove (11; 11') that opens radially inwards or radially outwards.

4. The circular filter element as claimed in claim 3, **characterised in that** the profiled body (12) is formed integrally with an internal frame of the filter element (1), against which the filter body (2) is radially supported.

5. The circular filter element as claimed in claim 3 or 4, **characterised in that** the profiled body (12) is integrally formed on such an end plate (3, 4).

6. The circular filter element as claimed in any one of claims 3 to 5, **characterised in that** the profiled body (12) is embedded in at least one such end plate (3, 4).

7. The circular filter element as claimed in any one of claims 3 to 6, **characterised in that** the two end pleats (5, 6) are each fixed to the profiled body (12) at a distance from each other.

8. The circular filter element as claimed in any one of claims 1 to 7, **characterised in that** the filter body (2) has at least two connection regions (7) spaced apart from each other in the circumferential direction.

9. A filter unit, in particular an air filter unit of an air supply system of an internal combustion engine,
- having a circular filter element (1) as claimed in any one of claims 1 to 8,
- having a housing (16) for receiving the circular filter element (1),
- wherein the housing (16) has an orientation contour (17) which, when the circular filter element (1) is inserted, cooperates with the connection region (7) for orientating the rotational position of the circular filter element (1).

10. The filter unit as claimed in claim 9, **characterised in that** the orientation contour (17) is a protrusion (18) that projects radially inwards with regard to the longitudinal central axis (10) of the filter body (2), which protrusion engages, in the circular filter element (1), in the longitudinal groove (11) and/or in the recess (13).

## Revendications

1. Elément de filtre annulaire, en particulier pour un dispositif de filtration (15) d'une installation d'air frais d'un moteur à combustion interne, comprenant :
- un corps filtrant annulaire (2) formé d'un matériau en bande plissée,
- au moins un flasque terminal (3, 4) délimitant axialement le corps filtrant (2),
- dans lequel des plissements d'extrémité (5, 6) contigus dans la direction périphérique sont reliés directement l'un à l'autre pour former une zone de liaison (7) convenant pour aligner l'élément de filtre (1) en position de rotation,
**caractérisé en ce que** :
- une rainure longitudinale (11) ouverte radialement vers l'extérieur ou radialement vers l'intérieur est formée dans la zone de liaison (7),
- au moins un tel flasque terminal (3, 4) présente un évidement (13) complémentaire à la rainure longitudinale (11),
- les deux plissements d'extrémité (5, 6) dans la zone de liaison (7) s'appliquent l'un sur l'autre à plat et s'étendent en l'occurrence tangentiellement à un cercle (9) autour de l'axe longitudinal (10) du corps filtrant (2).

2. Elément de filtre annulaire selon la revendication 1,
**caractérisé en ce que** :
- la zone de liaison (7) se distingue quant à sa géométrie des zones de plissements (8) du corps filtrant qui lui sont adjacentes (2) dans la direction périphérique et/ou
- la zone de liaison (7) s'étend dans la direction axiale sur tout le corps filtrant (2) et dans la direction périphérique sur seulement une partie du corps filtrant (2).

3. Elément de filtre annulaire selon la revendication 1 ou la revendication 2,
**caractérisé en ce que** :
l'on aménage dans la zone de liaison (7) un corps profilé (12) qui s'étend parallèlement à l'axe longitudinal (10) du corps filtrant (2) et forme une rainure longitudinale (11 ; 11') ouverte radialement vers l'intérieur ou radialement vers l'extérieur.

4. Elément de filtre annulaire selon la revendication 3,
**caractérisé en ce que** :
le corps profilé (12) est formé d'une pièce sur un corps interne de l'élément de filtre (1), sur lequel le corps filtrant (2) s'appuie radialement.

5. Elément de filtre annulaire selon la revendication 3 ou la revendication 4,
**caractérisé en ce que** :
le corps profilé (2) fait partie intégrante d'un tel flasque terminal (3, 4).

6. Elément de filtre annulaire selon l'une quelconque des revendications 3 à 5,
**caractérisé en ce que** :
le corps profilé (12) est encastré dans au moins un tel flasque terminal (3, 4).

7. Elément de filtre annulaire selon l'une quelconque des revendications 3 à 6,
**caractérisé en ce que** :
les deux plissements d'extrémité (5, 6) sont fixés à distance l'un de l'autre respectivement sur le corps profilé (12).

8. Elément de filtre annulaire selon l'une quelconque des revendications 1 à 7,
**caractérisé en ce que** :
le corps filtrant (2) présente au moins deux zones de liaison (7) espacées l'une de l'autre dans la direction périphérique.

9. Dispositif de filtration, en particulier dispositif de filtration d'air d'une installation d'air frais d'un moteur à combustion interne, comprenant :
- un élément de filtre annulaire (1) selon l'une quelconque des revendications 1 à 8,
- un boîtier (16) pour recevoir l'élément de filtre annulaire (1),
- dans lequel le boîtier (16) présente un contour d'alignement (17) qui coopère avec la zone de liaison (7) lors de l'utilisation de l'élément de filtre annulaire (1) afin d'aligner la position en rotation de l'élément de filtre annulaire (1).

10. Dispositif de filtration selon la revendication 9,
**caractérisé en ce que** :
le contour d'alignement (17) est une saillie (18) saillant radialement vers l'intérieur par rapport à l'axe longitudinal (10) du corps filtrant (2), laquelle saillie s'engage sur l'élément de filtre annulaire (1) dans la rainure longitudinale (11) et/ou dans l'évidement (13).
